(19) Europäisches Patentamt
European Patent Office
Office européen des brevets

(11) **EP 4 529 267 A1**

(12) **EUROPEAN PATENT APPLICATION**
published in accordance with Art. 153(4) EPC

(43) Date of publication:
**26.03.2025 Bulletin 2025/13**

(21) Application number: **22941982.5**

(22) Date of filing: **17.05.2022**

(51) International Patent Classification (IPC):
**H04W 36/00** (2009.01)

(86) International application number:
**PCT/CN2022/093405**

(87) International publication number:
**WO 2023/220940 (23.11.2023 Gazette 2023/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **YANG, Xing
Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **CELL HANDOVER METHOD AND APPARATUS**

(57) Disclosed in embodiments of the present invention are a cell handover method and apparatus, applicable to the technical field of communications. The method performed by a terminal device comprises: determining a link failure, and performing cell selection; determining the selected cell as a conditional handover (CHO) target cell, wherein the CHO target cell is determined by the terminal device according to CHO configuration information; and in response to a handover condition being satisfied, initiating handover to the CHO target cell according to the CHO configuration information. Therefore, a handover failure can be avoided, and system reliability is improved.

| A link failure is determined, and a cell selection is performed | S21 |
| A selected cell is determined as a conditional handover (CHO) target cell; where the CHO target cell is determined by the terminal based on the CHO configuration information | S22 |
| A handover to the CHO target cell is initiated based on the CHO configuration information, in response to a handover condition being satisfied | S23 |

FIG. 2

EP 4 529 267 A1

## Description

### TECHNICAL FIELD

The present disclosure relates to the field of communication technologies, and in particular to a cell handover method and a cell handover device.

### BACKGROUND

During a handover process, a network side device may transmit a handover request to a handover target cell based on a measurement reporting result from a terminal (User Equipment, UE). After the target cell completes confirmation, the network side device may transmit a handover command to the UE, which carries configuration information of the target cell. After receiving the handover command, the UE may initiate a random access process to the target cell.

However, in a case that the network side device transmits the handover command too late, inability to complete the cell handover may be caused, resulting in a handover failure, which is an issue that needs to be addressed urgently.

### SUMMARY

The embodiments of the present disclosure provide a cell handover method and a cell handover device, which are applicable in the field of communication technologies. A terminal determines a link failure, performs a cell selection, and determines a selected cell as a conditional handover (CHO) target cell; the CHO target cell is determined by the terminal based on CHO configuration information; in response to a handover condition being satisfied, a handover to the CHO target cell is initiated based on the CHO configuration information, to avoid a handover failure and improve system reliability.

In a first aspect, embodiments of the present disclosure provide a cell handover method, which is performed by a terminal, including: determining a link failure, and performing a cell selection; determining a selected cell as a conditional handover (CHO) target cell, where the CHO target cell is determined by the terminal based on CHO configuration information; and initiating a handover to the CHO target cell based on the CHO configuration information, in response to a handover condition being satisfied.

Based on the embodiments of the present disclosure, a terminal determines a handover failure, performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In a second aspect, embodiments of the present disclosure provide another cell handover method, which is performed by a network side device, including: transmitting conditional handover (CHO) configuration information to a terminal, where the CHO configuration information is used to indicate a CHO target cell, the CHO target cell is a cell obtained by the terminal by performing a cell selection in a case that a link failure is determined, and is a cell to which the terminal initiates a handover based on the CHO configuration information in response to a handover condition being satisfied.

In a third aspect, embodiments of the present disclosure provide a communication device, which has some or all of functions of the terminal in the method described in the first aspect. For example, functions of the communication device may include functions of some or all of the embodiments in the present disclosure, or may include functions for implementing any one of the embodiments in the present disclosure. The functions may be implemented by hardware, or implemented by hardware executing corresponding software. The hardware or software includes one or more units or modules corresponding to the above functions.

Optionally, in an embodiment of the present disclosure, a structure of the communication device may include a transceiving module and a processing module, and the processing module is configured to support the communication device to perform corresponding functions in the above method. The transceiving module is configured to support communication between the communication device and other device. The communication device may further include a storage module, and the storage module is configured to couple with the transceiving module and the processing module, and store a computer program and data needed by the communication device.

As an example, the processing module may be a processor, the transceiving module may be a transceiver or a communication interface, and the storage module may be a memory.

In some embodiments, the device includes: a processing module, configured to determine a link failure, and perform a cell selection, where the processing module is further configured to determine a selected cell as a conditional handover (CHO) target cell, where the CHO target cell is determined by the terminal according to CHO configuration information; and a transceiving module, configured to initiate a handover to the CHO target cell based on the CHO configuration information, in response to a handover condition being satisfied.

In a fourth aspect, embodiments of the present disclosure provide another communication device, which has some or all of functions of the network side device in the method described in the second aspect. For example, functions of the communication device may include functions of some or all of the embodiments in the present disclosure, or may include functions for implementing any one of the embodiments in the present disclosure.

The functions may be implemented by hardware, or implemented by hardware executing corresponding software. The hardware or software includes one or more units or modules corresponding to the above functions.

Optionally, in an embodiment of the present disclosure, a structure of the communication device may include a transceiving module and a processing module, and the processing module is configured to support the communication device to perform corresponding functions in the above method. The transceiving module is configured to support communication between the communication device and other device. The communication device may further include a storage module, and the storage module is configured to couple with the transceiving module and the processing module, and store a computer program and data needed by the communication device.

In some embodiments, the device includes: a transceiving module, configured to transmit conditional handover (CHO) configuration information to a terminal, where the CHO configuration information is used to indicate a CHO target cell, the CHO target cell is a cell obtained by the terminal by performing a cell selection in a case that a link failure is determined, and is a cell to which the terminal initiates a handover based on the CHO configuration information in response to a handover condition being satisfied.

In a fifth aspect, embodiments of the present disclosure provide a communication device, including a processor. When the processor calls a computer program in a memory, the method described in the first aspect is performed.

In a sixth aspect, embodiments of the present disclosure provide a communication device, including a processor. When the processor calls a computer program in a memory, the method described in the second aspect is performed.

In a seventh aspect, embodiments of the present disclosure provide a communication device, including a processor and a memory, where the memory is configured to store a computer program; the processor is configured to execute the computer program stored in the memory to cause the communication device to perform the method described in the first aspect.

In an eighth aspect, embodiments of the present disclosure provide a communication device, including a processor and a memory, where the memory is configured to store a computer program; the processor is configured to execute the computer program stored in the memory to cause the communication device to perform the method described in the second aspect.

In a ninth aspect, embodiments of the present disclosure provide a communication device, including a processor and an interface circuit, where the interface circuit is configured to receive code instructions and transmit them to the processor, and the processor is configured to execute the code instructions to cause the device to perform the method described in the first aspect.

In a tenth aspect, embodiments of the present disclosure provide a communication device, including a processor and an interface circuit, where the interface circuit is configured to receive code instructions and transmit them to the processor, and the processor is configured to execute the code instructions to cause the device to perform the method described in the second aspect.

In an eleventh aspect, embodiments of the present disclosure provide a communication system, and the system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, embodiments of the present disclosure provide a computer readable storage medium, configured to store instructions used by the terminal described above, and when the instructions are executed, the terminal is caused to perform the method described in the first aspect.

In a thirteenth aspect, embodiments of the present disclosure provide a readable storage medium, configured to store instructions used by the network side device described above. When the instructions are executed, the network side device is caused to perform the method described in the second aspect.

In a fourteenth aspect, the present disclosure further provides a computer program product including a computer program, which, when executed on a computer, causes the computer to perform the method described in the first aspect.

In a fifteenth aspect, the present disclosure further provides a computer program product including a computer program, which, when executed on a computer, causes the computer to perform the method described in the second aspect.

In a sixteenth aspect, the present disclosure provides a chip system, including at least one processor and an interface, for supporting a terminal to implement the functions involved in the first aspect, such as determining or processing at least one of data or information involved in the above method.

In a feasible design, the chip system further includes a memory, and the memory is configured to store a computer program and data needed by the terminal. The chip system may be formed by chips, or may include chips and other discrete devices.

In a seventeenth aspect, the present disclosure provides a chip system, including at least one processor and an interface, for supporting a network side device to implement the functions involved in the second aspect, such as determining or processing at least one of data or information involved in the above method.

In a feasible design, the chip system further includes a memory, and the memory is configured to store a computer program and data needed by the network side device. The chip system may be formed by chips, or may include chips and other discrete devices.

In an eighteenth aspect, the present disclosure provides a computer program, which, when executed on a computer, causes the computer to perform the method described in the first aspect.

In a nineteenth aspect, the present disclosure provides a computer program, which, when executed on a computer, causes the computer to perform the method described in the second aspect.

## BRIEF DESCRIPTION OF THE DRAWINGS

In order to more clearly illustrate the technical solutions in the embodiments of the present disclosure or the background, drawings required to be used in the embodiments of the present disclosure or the background will be described hereinafter.

FIG. 1 is an architecture diagram of a communication system according to embodiments of the present disclosure;
FIG. 2 is a flow chart of a cell handover method according to embodiments of the present disclosure;
FIG. 3 is a flow chart of another cell handover method according to embodiments of the present disclosure;
FIG. 4 is a flow chart of another cell handover method according to embodiments of the present disclosure;
FIG. 5 is a flow chart of another cell handover method according to embodiments of the present disclosure;
FIG. 6 is a flow chart of another cell handover method according to embodiments of the present disclosure;
FIG. 7 is a flow chart of another cell handover method according to embodiments of the present disclosure;
FIG. 8 is a flow chart of another cell handover method according to embodiments of the present disclosure;
FIG. 9 is a flow chart of another cell handover method according to embodiments of the present disclosure;
FIG. 10 is a flow chart of another cell handover method according to embodiments of the present disclosure;
FIG. 11 is a flow chart of another cell handover method according to embodiments of the present disclosure;
FIG. 12 is a structural diagram of a communication device according to embodiments of the present disclosure;
FIG. 13 is a structural diagram of another communication device according to embodiments of the present disclosure; and
FIG. 14 is a structural diagram of a chip according to embodiments of the present disclosure.

## DETAILED DESCRIPTION

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the present invention. Rather, they are merely examples of devices and methods consistent with some aspects of the present invention as recited in the appended claims.

The terms used in the present disclosure are for the purpose of describing particular embodiments only and are not intended to limit the present disclosure. The singular forms "a" and "the" used in the present disclosure and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the expressions "if" and "on condition that" used herein may be interpreted as "in a case that" or "when" or "in response to determining".

For ease of understanding, terms involved in the present disclosure are first introduced.

### 1. Mobility management (Mobile Management, MM)

Mobility management refers to a management process for location information, security and service continuity of a terminal. Mobility management can optimize a state of a connection between the terminal and a network side device, thereby providing guarantees for application of various network services.

### 2. Beam (Wave beam)

A beam refers to a shape formed on the surface of the earth by electromagnetic waves emitted from a satellite antenna (similar to a light beam emitted by a flashlight into the dark). Beams can be divided into several types, such as global beams, spot beams, and shaped beams, shapes of which may be determined by transmission antennas.

3. Measurement reporting

Measurement reporting refers to a process in which a terminal uploads a beam measurement result to a network side device after obtaining the beam measurement result. The terminal may perform measurement reporting periodically, or the measurement reporting operation may be triggered by a specific event.

4. Cell (mobile communication term)

A cell, also called a cellular cell, refers to a region covered by a base station or a part of a base station (sector antenna) in a cellular mobile communication system. In this region, a mobile station may reliably communicate with the base station through radio channels. In one cell, there may be one or more beams.

5. Handover

Handover is one of the measures for mobility management in communication systems. In a communication system, a terminal may perform a cell handover or beam switching operation to change a channel used in a communication process between the terminal and a network side device.

6. Universal Time

Universal time can also be called Greenwich mean solar time, which uses the rotation of the earth as a standard for measurement, and universal time can express the rate of the rotation of the earth. The rotation of the earth is actually uneven, so universal time is a non-uniform time.

7. Coordinated universal time (coordinated universal time, UTC)

UTC is based on a length of a second of atomic time and is as close to universal time as possible. It is a standard time for radio communications. In order to ensure that UTC is strictly synchronized with atomic time, UTC can be adjusted by a full second, such as adding one second to UTC or subtracting one second from UTC.

In order to better understand a cell handover method disclosed in embodiments of the present disclosure, a communication system to which the embodiments of the present disclosure are applicable is first described hereinafter.

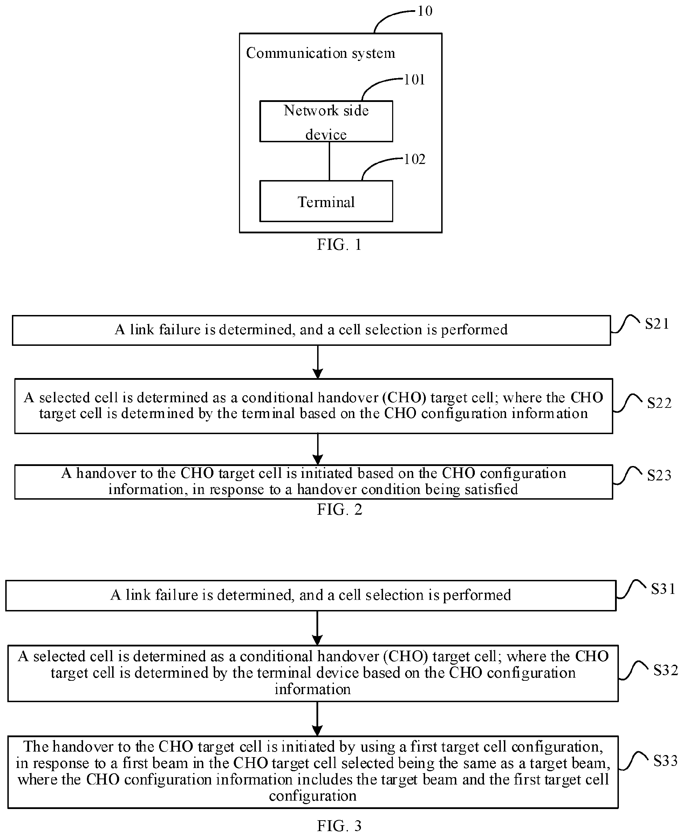

Reference is made to FIG. 1, which is an architecture diagram of a communication system 10 according to embodiments of the present disclosure. The communication system 10 may include, but is not limited to, one network side device and one terminal. The quantity and forms of devices shown in FIG. 1 are only for examples and do not constitute a limitation on the embodiments of the present disclosure. In actual applications, two or more than two network side devices and two or more than two terminals may be included. In FIG. 1, a case where the communication system 10 includes a network side device 101 and a terminal 102 is taken as an example.

It should be noted that the technical solutions of the embodiments of the present disclosure can be applied to various communication systems, such as a long term evolution (long term evolution, LTE) system, a 5th generation (5th generation, 5G) mobile communication system, a 5G new radio (new radio, NR) system, or other new mobile communication systems in the future.

The network side device 101 in the embodiments of the present disclosure is an entity on a network side for transmitting or receiving signals. For example, the network side device 101 may be an evolved NodeB (evolved NodeB, eNB), a transmission reception point (transmission reception point, TRP), a next generation NodeB (next generation NodeB, gNB) in an NR system, a base station in other mobile communication systems in the future, or an access node in a wireless fidelity (wireless fidelity, WiFi) system, etc. The specific technologies and the specific device form used by the network side device are not limited in the embodiments of the present disclosure.

The network side device according to the embodiments of the present disclosure may include a central unit (central unit, CU) and a distributed unit (distributed unit, DU). The CU may also be referred to as a control unit. Protocol layers of the network side device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal 12 in the embodiments of the present disclosure is an entity on a user side for receiving or transmitting signals, such as a mobile phone. The terminal may also be referred to as a terminal, a user equipment (user equipment, UE), a mobile station (mobile station, MS), a mobile terminal (mobile terminal, MT), etc. The terminal may be a car with a communication function, a smart car, a mobile phone, a wearable device, a tablet computer (Pad), a computer with a wireless transceiving function, a virtual reality (virtual reality, VR) terminal, an augmented reality (augmented reality, AR) terminal, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), etc.

The specific technologies and the specific device form used by the terminal are not limited in the embodiments of the present disclosure.

It can be understood that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

A cell handover method and a cell handover device according to the present disclosure are described in detail hereinafter with reference to the drawings.

FIG. 2 is a flow chart of a cell handover method according to embodiments of the present disclosure, and the method is performed by a terminal. The cell handover method in this embodiment may be applied to a terminal, such as a mobile phone, or, a tablet or a smart watch with a mobile communication function, etc., which is not limited. As shown in FIG. 2, the method may include but is not limited to the following steps.

S21: A link failure is determined, and a cell selection is performed.

In the embodiments of the present disclosure, the terminal performs a cell selection in a case that a link failure is determined. For example, in a case that a radio link failure or a handover failure is determined, a cell selection is performed, where cell(s) are randomly selected from candidate cells, or cell(s) are selected based on a configuration of a network side device or an agreement in a protocol, etc.

In some embodiments, the link failure includes at least one of:

> a handover failure;
> a radio link failure;
> a reconfiguration failure;
> a timer expiration;
> an integrity check failure;
> it is detected by a remote terminal that a radio link failure of a sidelink occurs between the remote terminal and a relay terminal, where the terminal is the remote terminal; or,
> a notification message transmitted by a relay terminal is received by a remote terminal, where the terminal is the remote terminal.

In the embodiments of the present disclosure, the terminal determines the link failure. For example, it may determine that an random access with a network side device fails, which results in a radio link failure; or it may determine that a handover is not successful during the cell handover process, which results in a handover failure; or it may determine that a reconfiguration performed based on a reconfiguration message of a network side device is not successful, which results in a reconfiguration failure; or it may determine that a timer expires during a cell access process; or it may determine that a timer expires during a cell handover process; or it may determine that a timer expires during a cell reconfiguration process; or it may determine that an integrity check fails; or in a case of serving as a remote terminal, it is detected by the terminal that a radio link failure of a sidelink occurs between the remote terminal and a relay terminal; or in a case of serving as a remote terminal, a notification message transmitted by a relay terminal may be received by the terminal.

The timer may be T312, T310, T316, etc.

S22: A selected cell is determined as a conditional handover (CHO) target cell; where the CHO target cell is determined by the terminal based on the CHO configuration information.

In the embodiments of the present disclosure, the terminal determines a selected cell as a CHO target cell, where the CHO target cell is determined by the terminal based on the CHO configuration information. In some feasible implementations, the CHO configuration information includes a handover target cell configuration, and the terminal may determine the CHO target cell based on the CHO configuration information.

In some embodiments, the terminal receives CHO (conditional handover) configuration information transmitted by a network side device.

In the embodiments of the present disclosure, the CHO configuration information is transmitted by the network side device to the terminal, and the terminal receives the CHO configuration information transmitted by the network side device to determine the CHO target cell based on the CHO configuration information.

In order to improve robustness of handover, conditional handover (CHO) is proposed in 5G, that is, the network side device may configure a CHO handover command for the terminal in advance, which includes a handover target cell configuration and a handover triggering condition, and the terminal may perform the handover on its own based on the CHO handover command when the handover triggering condition is satisfied.

It should be noted that in the embodiments of the present disclosure, the content included in the CHO configuration information transmitted by the network side device to the terminal may be the same as or different from the content included in the CHO handover command configured by the network side device for the terminal in advance in the conditional handover proposed in 5G, which is not specifically limited in the embodiments of the present disclosure.

S23: A handover to the CHO target cell is initiated based on the CHO configuration information, in response to a handover condition being satisfied.

In the embodiments of the present disclosure, the terminal determines a link failure and performs a cell selection, and then determines a selected cell as a CHO target cell; in this case, when it is determined that a handover condition is satisfied, the terminal initiates a handover to the CHO target cell based on the CHO configuration information.

The handover condition may involve periodicity, or a specific time, or the CHO target cell being a designated cell, or a beam in the CHO target cell selected being a designated beam, or a location of the terminal being a designated location, or a time when the terminal initiates the handover being a designated time, etc., which is not specifically limited in the embodiments of the present disclosure.

In embodiments of the present disclosure, a cell handover method is provided. In the method, a terminal determines a handover failure, performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In embodiments of the present disclosure, a cell handover method is provided. In the method, a terminal determines a radio link failure, performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In embodiments of the present disclosure, a cell handover method is provided. In the method, a terminal determines a reconfiguration failure, performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In embodiments of the present disclosure, a cell handover method is provided. In the method, a terminal determines a timer expiration, performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In embodiments of the present disclosure, a cell handover method is provided. In the method, a terminal determines an integrity check failure, performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In embodiments of the present disclosure, a cell handover method is provided. In the method, a terminal determines that it is detected by a remote terminal that a radio link failure of a sidelink occurs between the remote terminal and a relay terminal, where the terminal is the remote terminal; and the terminal performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

In embodiments of the present disclosure, a cell handover method is provided. In the method, a terminal determines that a notification message transmitted by a relay terminal is received by a remote terminal, where the terminal is the remote terminal; and the terminal performs a cell selection, and determines a selected cell as a conditional handover (CHO) target cell, where the CHO target cell is determined by the terminal based on CHO configuration information, and a handover to the CHO target cell is initiated based on the CHO configuration information in response to a handover condition being satisfied. In this way, a handover failure can be avoided and system reliability can be improved.

Based on the embodiments of the present disclosure, the terminal determines the link failure, performs the cell selection, and determines the selected cell as the conditional handover (CHO) target cell, where the CHO target cell is determined by the terminal based on the CHO configuration information, and the handover to the CHO target cell is initiated based on the CHO configuration information in response to the handover condition being satisfied. In this way, a handover failure can be avoided and system reliability can be improved.

FIG. 3 is a flow chart of another cell handover method according to embodiments of the present disclosure. The cell handover method in this embodiment may be applied to a terminal. As shown in FIG. 3, the method may include but is not limited to the following steps.

S31: A link failure is determined, and a cell selection is performed.

S32: A selected cell is determined as a conditional handover (CHO) target cell; where the CHO target cell is determined by the terminal based on the CHO configuration information.

For descriptions related to S31 and S32, reference may be made to relevant descriptions in the above embodiments, and the same contents will not be further provided herein.

S33: The handover to the CHO target cell is initiated by using a first target cell configuration, in response to a first beam in the CHO target cell selected being the same as a target beam, where the CHO configuration information includes the target beam and the first target cell configuration.

In the embodiments of the present disclosure, the CHO configuration information includes the target beam and the first target cell configuration, where the target beam may be a beam in the CHO target cell, or a beam of another cell.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam, the terminal initiates the handover to the CHO target cell based on the CHO configuration information, where the handover to the CHO target cell is initiated by using the first target cell configuration. In this way, a handover failure can be avoided and system reliability can be improved.

In some embodiments, the first target cell configuration is determined based on reconfiguration information provided by the CHO target cell in the CHO configuration information.

In the embodiments of the present disclosure, the network side device transmits the CHO configuration information to the terminal. The reconfiguration information provided by the CHO target cell in the CHO configuration information, such as RRC (Radio Resource Control) reconfiguration information, carries a synchronous reconfiguration (reconfiguration with sync) information element.

In some embodiments, the first beam is at least one candidate beam with a beam quality greater than a specific threshold in the CHO target cell.

In embodiments of the present disclosure, the first beam in the CHO target cell selected by the terminal may be at least one candidate beam with a beam quality greater than a specific threshold in the CHO target cell, where the specific threshold may be agreed upon in advance, such as determined based on a user indication, or determined based on a configuration of a network side device or an agreement in a protocol, etc., which is not specifically limited in the embodiments of the present disclosure.

In some embodiments, the first beam is a beam with a strongest signal in the CHO target cell.

In the embodiments of the present disclosure, the first beam in the CHO target cell selected by the terminal may be a beam with a strongest signal in the CHO target cell, where the beam with the strongest signal may be a beam with a best beam quality, or a beam with a strongest signal that is determined by other beam measurement means, etc., which is not specifically limited in the embodiments of the present disclosure.

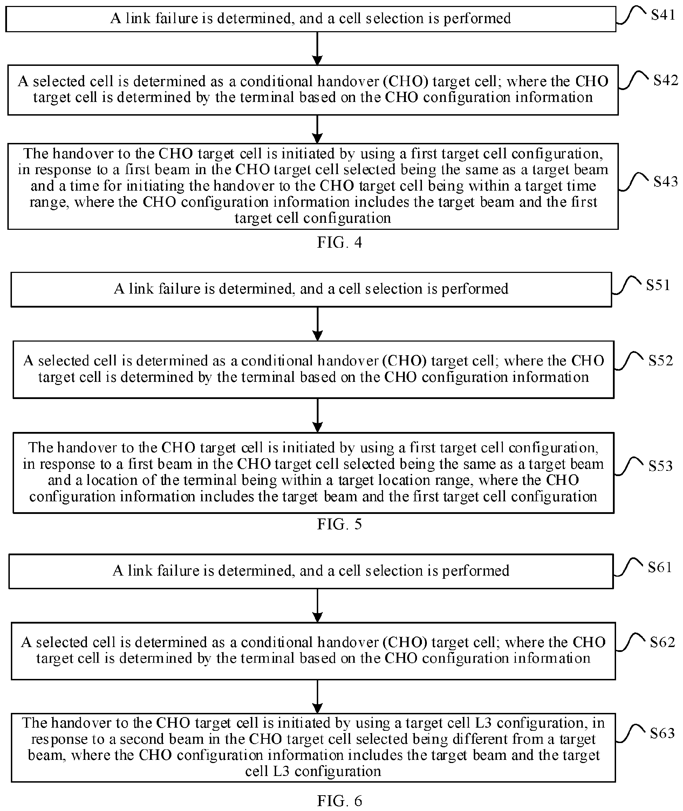

FIG. 4 is a flow chart of another cell handover method according to embodiments of the present disclosure. The cell handover method in this embodiment may be applied to a terminal. As shown in FIG. 4, the method may include but is not limited to the following steps.

S41: A link failure is determined, and a cell selection is performed.

S42: A selected cell is determined as a conditional handover (CHO) target cell; where the CHO target cell is determined by the terminal based on the CHO configuration information.

For descriptions related to S41 and S42, reference may be made to relevant descriptions in the above embodiments, and the same contents will not be further provided herein.

S43: The handover to the CHO target cell is initiated by using a first target cell configuration, in response to a first beam in the CHO target cell selected being the same as a target beam and a time for initiating the handover to the CHO target cell being within a target time range, where the CHO configuration information includes the target beam and the first target cell configuration.

In the embodiments of the present disclosure, the CHO configuration information includes the target beam and the first target cell configuration, where the target beam may be a beam in the CHO target cell, or a beam of another cell.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam and the time for initiating the handover to the CHO target cell is within the target time range, the terminal initiates the handover to the CHO target cell based on the CHO configuration information, where the handover to the CHO target cell is initiated by using the first target cell configuration. In this way, a handover failure can be avoided and system reliability can be improved.

For descriptions related to the first target cell configuration and the first beam, reference may be made to relevant descriptions in the above embodiments, and the same contents will not be further provided herein.

In some embodiments, the target time range is a target absolute time range or a target relative time range;

the target absolute time range is a target UTC time range;
a start point of the target relative time range is a UTC time or an event triggering time, and a length of the target relative time range is a timer length of a timer or a duration;
the event triggering time is a time when the CHO configuration information is received, or a time when the CHO configuration information is executed, or a time when a measurement event configured by the network side device is satisfied.

In some embodiments, the timer length or the duration is determined based on a configuration of the network side device.

In the embodiments of the present disclosure, the terminal may determine the timer length or the duration based on the configuration of the network side device.

It can be understood that in the embodiments of the present disclosure, the target time range is a target absolute time range, and the target absolute time range is a target UTC time range. In this case, the target time range is a standard time range in radio communications, which is a real time range.

In a feasible implementation, in the embodiments of the present disclosure, the target time range is a target relative time range, a start point of the target relative time range is a UTC time, and a length of the target relative time range is a timer length of a timer. The terminal may determine the timer length based on a configuration of the network side device.

In a feasible implementation, in the embodiments of the present disclosure, the target time range is a target relative time range, a start point of the target relative time range is an event triggering time, and a length of the target relative time range is a timer length of a timer. The terminal may determine the timer length based on a configuration of the network side device.

The event triggering time is a time when the CHO configuration information is received, or a time when the CHO configuration information is executed, or a time when a measurement event configured by the network side device is satisfied.

In the embodiments of the present disclosure, the target time range is a target relative time range, a start point of the target relative time range is a time when the CHO configuration information is received, and a length of the target relative time range is a timer length of a timer.

In the embodiments of the present disclosure, the target time range is a target relative time range, a start point of the target relative time range is a time when the CHO configuration information is executed, and a length of the target relative time range is a timer length of a timer.

In the embodiments of the present disclosure, the target time range is a target relative time range, a start point of the target relative time range is a time when a measurement event configured by the network side device is satisfied, and a length of the target relative time range is a timer length of a timer.

In a feasible implementation, in the embodiments of the present disclosure, the target time range is a target relative time range, a start point of the target relative time range is a UTC time, and a length of the target relative time range is a duration. The terminal may determine the duration based on a configuration of the network side device.

In a feasible implementation, in the embodiments of the present disclosure, the target time range is a target relative time range, a start point of the target relative time range is an event triggering time, and a length of the target relative time range is a duration. The terminal may determine the duration based on a configuration of the network side device.

The event triggering time is a time when the CHO configuration information is received, or a time when the CHO configuration information is executed, or a time when a measurement event configured by the network side device is satisfied.

In the embodiments of the present disclosure, the target time range is a target relative time range, a start point of the target relative time range is a time when the CHO configuration information is received, and a length of the target relative time range is a duration.

In the embodiments of the present disclosure, the target time range is a target relative time range, a start point of the target relative time range is a time when the CHO configuration information is executed, and a length of the target relative time range is a duration.

In the embodiments of the present disclosure, the target time range is a target relative time range, a start point of the target relative time range is a time when a measurement event configured by the network side device is satisfied, and a length of the target relative time range is a duration.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam and the time for initiating the handover to the CHO target cell is within the target absolute time range, the terminal initiates the handover to the CHO target cell based on the CHO configuration information, where the handover to the CHO target cell is initiated by using the first target cell configuration. In this way, a handover failure can be avoided and system reliability can be improved.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam and the time for initiating the handover to the CHO target cell is within the target relative time range, the terminal initiates the handover to the CHO target cell based on the CHO configuration information, where the handover to the CHO target cell is initiated by using the first target cell configuration. In this way, a handover failure can be avoided and system reliability can be improved.

FIG. 5 is a flow chart of another cell handover method according to embodiments of the present disclosure. The cell handover method in this embodiment may be applied to a terminal. As shown in FIG. 5, the method may include but is not limited to the following steps.

S51: A link failure is determined, and a cell selection is performed.

S52: A selected cell is determined as a conditional handover (CHO) target cell; where the CHO target cell is determined by the terminal based on the CHO configuration information.

For descriptions related to S51 and S52, reference may be made to relevant descriptions in the above embodiments, and the same contents will not be further provided herein.

S53: The handover to the CHO target cell is initiated by using a first target cell configuration, in response to a first beam in the CHO target cell selected being the same as a target beam and a location of the terminal being within a target location range, where the CHO configuration information includes the target beam and the first target cell configuration.

In the embodiments of the present disclosure, the CHO configuration information includes the target beam and the first target cell configuration, where the target beam may be a beam in the CHO target cell, or a beam of another cell.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam and the location of the terminal is within the target location range, the terminal initiates the handover to the CHO target cell based on the CHO configuration information, where the handover to the CHO target cell is initiated by using the first target cell configuration. In this way, a handover failure can be avoided and system reliability can be improved.

For descriptions related to the first target cell configuration and the first beam, reference may be made to relevant descriptions in the above embodiments, and the same contents will not be further provided herein.

In some embodiments, the target location range is a target absolute location range or a target relative location range;

> the target absolute location range is a target geographical location coordinate range;
> the target relative location range is a target distance range between the terminal and the network side device, or a target distance range between the terminal and a reference point.

In a feasible implementation, in the embodiments of the present disclosure, the target location range is a target absolute location range, and the target absolute location range is a target geographic location coordinate range.

It is understandable that the target geographical location coordinate range may be a real geographical location coordinate range, such as a range of longitude and latitude coordinates, or, a range of longitude, latitude, and altitude coordinates, etc.

In a feasible implementation, in the embodiments of the present disclosure, the target location range is a target relative location range, and the target relative location range is a target distance range between the terminal and the network side device.

The target distance range between the terminal and the network side device may be a straight-line distance range between the terminal and the network side device, or a shortest distance range within which the terminal and the network side device can communicate, etc.

In a feasible implementation, in the embodiments of the present disclosure, the target location range is a target relative location range, and the target relative location range is a target distance range between the terminal and a reference point.

The target distance range between the terminal and the reference point may be a straight-line distance range between the terminal and the reference point, or a shortest distance range within which the terminal and the reference point can communicate. The reference point may be preset, or a reference point determined in the related technologies may be reused. The preset manner may be determined based on a configuration of the network side device or an agreement in a protocol, or determined based on a user indication, etc.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam and the location of the terminal is within the target absolute location range, the terminal initiates the handover to the CHO target cell based on the CHO configuration information, where the handover to the CHO target cell is initiated by using the first target cell configuration. In this way, a handover failure can be avoided and system reliability can be improved.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the first beam in the CHO target cell selected is the same as the target beam and the location of the terminal is within the target relative location range, the terminal initiates the handover to the CHO target cell based on the CHO configuration information, where the handover to the CHO target cell is initiated by using the first target cell configuration. In this way, a handover failure can be avoided and system reliability can be improved.

FIG. 6 is a flow chart of another cell handover method according to embodiments of the present disclosure. The cell handover method in this embodiment may be applied to a terminal. As shown in FIG. 6, the method may include but is not limited to the following steps.

S61: A link failure is determined, and a cell selection is performed.

S62: A selected cell is determined as a conditional handover (CHO) target cell; where the CHO target cell is determined by the terminal based on the CHO configuration information.

For descriptions related to S61 and S62, reference may be made to relevant descriptions in the above embodiments, and the same contents will not be further provided herein.

S63: The handover to the CHO target cell is initiated by using a target cell L3 configuration, in response to a second beam in the CHO target cell selected being different from a target beam, where the CHO configuration information includes the target beam and the target cell L3 configuration.

In the embodiments of the present disclosure, the CHO configuration information includes the target beam and the target cell L3 configuration, where the target beam may be a beam in the CHO target cell, or a beam of another cell.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the target cell L3 configuration. In this way, a handover failure can be avoided and system reliability can be improved.

The second beam may be the same as or different from the first beam in the above embodiments of the present disclosure. In a case that the second beam is the same as the first beam, for descriptions related to the second beam, reference may be made to relevant descriptions of the first beam in the above embodiments, and the same contents will not be further provided herein.

In some embodiments, the target cell L3 configuration includes at least one of:

　　a radio resource control (RRC) configuration;
　　a service data adaptation protocol (SDAP) configuration;
　　a packet data convergence protocol (PDCP) configuration;
　　a radio link control (RLC) configuration;
　　a medium access control (MAC) configuration;
　　a bearer configuration;
　　a measurement configuration; or,
　　a handover configuration.

In a feasible implementation, in the embodiments of the present disclosure, the target cell L3 configuration includes an RRC configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the RRC configuration. In this way, a handover failure can be avoided and system reliability can be improved.

In a feasible implementation, in the embodiments of the present disclosure, the target cell L3 configuration includes an SDAP (service data adaptation protocol) configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the SDAP configuration. In this way, a handover failure can be avoided and system reliability can be improved.

The SDAP configuration may include, for example, one or more of: a session identifier, whether to add an uplink header, whether to add a downlink header, whether to configure a default bearer, or a mapping relationship between a flow and a bearer. Or, the SDAP configuration may be other information than the above examples, which is not specifically limited in the embodiments of the present disclosure.

In a feasible implementation, in the embodiments of the present disclosure, the target cell L3 configuration includes a PDCP (packet data convergence protocol) configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the PDCP configuration. In this way, a handover failure can be avoided and system reliability can be improved.

The PDCP configuration may be, for example, one or more of: an uplink PDCP sequence number length, a downlink PDCP sequence number length, a discard timer, a header compression configuration, a reordering timer, or an uplink splitting threshold. Or, the PDCP configuration may be other information than the above examples, which is not specifically limited in the embodiments of the present disclosure.

In a feasible implementation, in the embodiments of the present disclosure, the target cell L3 configuration includes an RLC (Radio Link Control) configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the RLC configuration. In this way, a handover failure can be avoided and system reliability can be improved.

The RLC configuration may include at least one of: an unacknowledged mode or acknowledged mode, a polling-related configuration in an acknowledged mode, a maximum quantity of retransmissions in an acknowledged mode, or, whether out-of-order delivery is supported. Or, the RLC configuration may be other information than the above examples, which is not specifically limited in the embodiments of the present disclosure.

In a feasible implementation, in the embodiments of the present disclosure, the target cell L3 configuration includes a MAC (Medium Access Control) configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the MAC configuration. In this way, a handover failure can be avoided and system reliability can be improved.

In a feasible implementation, in the embodiments of the present disclosure, the target cell L3 configuration includes a bearer configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the bearer configuration. In this way, a handover failure can be avoided and system reliability can be improved.

In a feasible implementation, in the embodiments of the present disclosure, the target cell L3 configuration includes a measurement configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the measurement configuration. In this way, a handover failure can be avoided and system reliability can be improved.

In a feasible implementation, in the embodiments of the present disclosure, the target cell L3 configuration includes a handover configuration. The terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam, the terminal initiates the handover to the CHO target cell based on the CHO configuration information, where the handover to the CHO target cell is initiated by using the handover configuration. In this way, a handover failure can be avoided and system reliability can be improved.

It should be noted that the above embodiments are not exhaustive and are only illustrations of some embodiments, and are not intended to be specific limitations on the protection scope of the embodiments of the present disclosure. In addition, the above embodiments may be implemented individually or multiple embodiments may be implemented in combination.

In some embodiments, the CHO configuration information further includes a target cell L1 configuration or a target cell L2 configuration;

the target cell L1 configuration is determined based on a configuration of the network side device or is a default value specified in a protocol;
the target cell L2 configuration is determined based on a configuration of the network side device or is a default value specified in a protocol.

In the embodiments of the present disclosure, the CHO configuration information further includes a target cell L1 configuration or a target cell L2 configuration, where the target cell L1 configuration is determined based on a configuration of the network side device or is a default value specified in a protocol, the target cell L2 configuration is determined based on a configuration of the network side device or is a default value specified in a protocol.

In a case that the CHO configuration information is transmitted by the network side device to the terminal, the target cell L1 configuration is determined by the configuration of the network side device, or the target cell L2 configuration is determined by the configuration of the network side device.

In the cell handover in the related technologies, measurement results that trigger measurement reporting and CHO configuration information are from cell measurements based on a target cell L3 configuration, i.e., obtained by filtering measurement results based on a target cell L1 configuration or a target cell L2 configuration across multiple beams.

Measurement results of a serving cell or a neighboring cell used in evaluating satisfaction of a measurement event and reporting are obtained from measurement results of the UE at layer 1 (target cell L1 configuration) that have undergone filtering at layer 3 (target cell L3 configuration). The filtering at layer 3 (target cell L3 configuration) satisfies the following formula:

$$F_n = (1-a)*F_{n-1} + a*M_n$$

$M_n$ is a latest measurement result; $F_n$ is a filtered result; $F_{n-1}$ is a previously filtered measurement result.

In the embodiments of the present disclosure, accessing the CHO target cell requires the target cell L3 configuration, or, the target cell L3 configuration and the target cell L1 configuration, or, the target cell L3 configuration and the target cell L2 configuration. The CHO configuration information includes the target cell L3 configuration, or includes the target cell L3 configuration and the target cell L1 configuration, or includes the target cell L3 configuration and the target cell L2 configuration. The target cell L1 configuration is beam related, and the target cell L2 configuration is beam related.

In some embodiments, the target cell L1 configuration includes at least one of:

    a physical layer configuration;
    a beam configuration;
    a random access resource;
    a contention-based random access manner;
    a transmission power; or,
    a modulation and demodulation order.

In a feasible implementation, in the embodiments of the present disclosure, the target cell L1 configuration includes a physical layer configuration.

In a feasible implementation, in the embodiments of the present disclosure, the target cell L1 configuration includes a beam configuration.

In a feasible implementation, in the embodiments of the present disclosure, the target cell L1 configuration includes a random access resource.

In a feasible implementation, in the embodiments of the present disclosure, the target cell L1 configuration includes a contention-based random access manner.

In a feasible implementation, in the embodiments of the present disclosure, the target cell L1 configuration includes a transmission power.

In a feasible implementation, in the embodiments of the present disclosure, the target cell L1 configuration includes a modulation and demodulation order.

It should be noted that the above embodiments are not exhaustive and are only illustrations of some embodiments, and are not intended to be specific limitations on the protection scope of the embodiments of the present disclosure. In addition, the above embodiments may be implemented individually or multiple embodiments may be implemented in combination.

In some embodiments, the target cell L2 configuration includes at least one of:

    a physical layer configuration;
    a beam configuration;
    a random access resource;
    a contention-based random access manner;
    a transmission power; or,
    a modulation and demodulation order.

In a feasible implementation, in the embodiments of the present disclosure, the target cell L2 configuration includes a physical layer configuration.

In a feasible implementation, in the embodiments of the present disclosure, the target cell L2 configuration includes a beam configuration.

In a feasible implementation, in the embodiments of the present disclosure, the target cell L2 configuration includes a random access resource.

In a feasible implementation, in the embodiments of the present disclosure, the target cell L2 configuration includes a contention-based random access manner.

In a feasible implementation, in the embodiments of the present disclosure, the target cell L2 configuration includes a transmission power.

In a feasible implementation, in the embodiments of the present disclosure, the target cell L2 configuration includes a modulation and demodulation order.

It should be noted that the above embodiments are not exhaustive and are only illustrations of some embodiments, and are not intended to be specific limitations on the protection scope of the embodiments of the present disclosure. In addition, the above embodiments may be implemented individually or multiple embodiments may be implemented in combination.

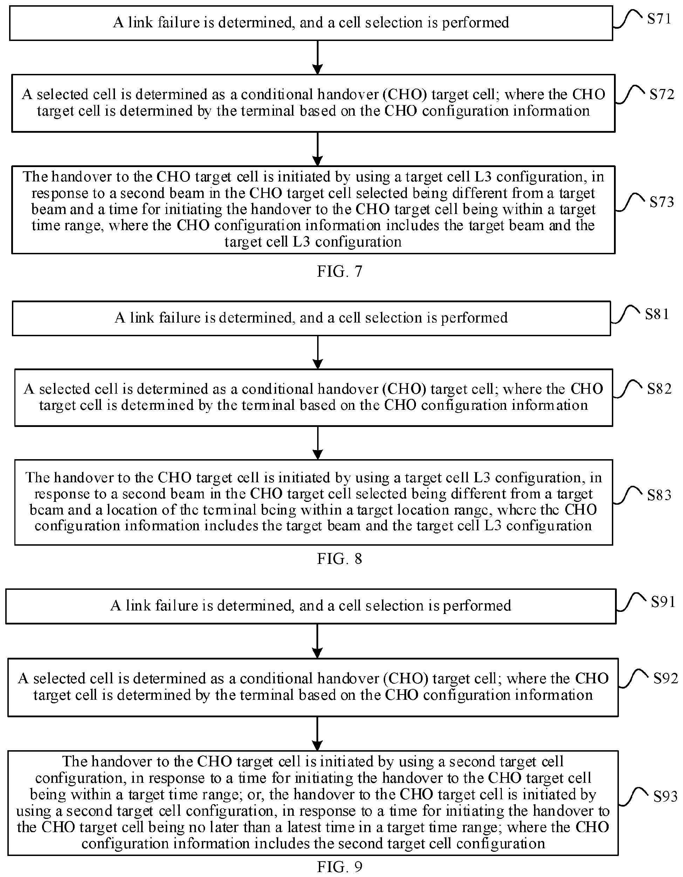

FIG. 7 is a flow chart of another cell handover method according to embodiments of the present disclosure. The cell handover method in this embodiment may be applied to a terminal. As shown in FIG. 7, the method may include but is not limited to the following steps.

S71: A link failure is determined, and a cell selection is performed.

S72: A selected cell is determined as a conditional handover (CHO) target cell; where the CHO target cell is determined by the terminal based on the CHO configuration information.

For descriptions related to S71 and S72, reference may be made to relevant descriptions in the above embodiments, and the same contents will not be further provided herein.

S73: The handover to the CHO target cell is initiated by using a target cell L3 configuration, in response to a second beam in the CHO target cell selected being different from a target beam and a time for initiating the handover to the CHO target cell being within a target time range, where the CHO configuration information includes the target beam and the target cell L3 configuration.

In the embodiments of the present disclosure, the CHO configuration information includes the target beam and the target cell L3 configuration, where the target beam may be a beam in the CHO target cell, or a beam of another cell.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam and the time for initiating the handover to the CHO target cell is within the target time range, the terminal initiates the handover to the CHO target cell based on the CHO configuration information, where the handover to the CHO target cell is initiated by using the target cell L3 configuration. In this way, a handover failure can be avoided and system reliability can be improved.

For descriptions related to the target cell L3 configuration and the second beam, reference may be made to relevant descriptions in the above embodiments, and the same contents will not be further provided herein.

For the description of the target time range, reference may be made to the description in the above embodiment, and the same contents will not be repeated here.

FIG. 8 is a flow chart of another cell handover method according to embodiments of the present disclosure. The cell handover method in this embodiment may be applied to a terminal. As shown in FIG. 8, the method may include but is not limited to the following steps.

S81: A link failure is determined, and a cell selection is performed.

S82: A selected cell is determined as a conditional handover (CHO) target cell; where the CHO target cell is determined by the terminal based on the CHO configuration information.

For descriptions related to S81 and S82, reference may be made to relevant descriptions in the above embodiments, and the same contents will not be further provided herein.

S83: The handover to the CHO target cell is initiated by using a target cell L3 configuration, in response to a second beam in the CHO target cell selected being different from a target beam and a location of the terminal being within a target location range, where the CHO configuration information includes the target beam and the target cell L3 configuration.

In the embodiments of the present disclosure, the CHO configuration information includes the target beam and the target cell L3 configuration, where the target beam may be a beam in the CHO target cell, or a beam of another cell.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the second beam in the CHO target cell selected is different from the target beam and the location of the terminal is within the target location range, the terminal initiates the handover to the CHO target cell based on the CHO configuration information, where the handover to the CHO target cell is initiated by using the target cell L3 configuration. In this way, a handover failure can be avoided and system reliability can be improved.

For descriptions related to the target cell L3 configuration and the second beam, reference may be made to relevant descriptions in the above embodiments, and the same contents will not be further provided herein.

For descriptions related to the target location range, reference may be made to relevant descriptions in the above embodiments, and the same contents will not be further provided herein.

FIG. 9 is a flow chart of another cell handover method according to embodiments of the present disclosure. The cell handover method in this embodiment may be applied to a terminal. As shown in FIG. 9, the method may include but is not limited to the following steps.

S91: A link failure is determined, and a cell selection is performed.

S92: A selected cell is determined as a conditional handover (CHO) target cell; where the CHO target cell is determined by the terminal based on the CHO configuration information.

For descriptions related to S91 and S92, reference may be made to relevant descriptions in the above embodiments, and the same contents will not be further provided herein.

S93: The handover to the CHO target cell is initiated by using a second target cell configuration, in response to a time for initiating the handover to the CHO target cell being within a target time range; or, the handover to the CHO target cell is initiated by using a second target cell configuration, in response to a time for initiating the handover to the CHO target cell being no later than a latest time in a target time range; where the CHO configuration information includes the second target cell configuration.

In the embodiments of the present disclosure, the CHO configuration information includes the second target cell configuration.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the time for initiating the handover to the CHO target cell is within the target time range, the terminal initiates the handover to the CHO target cell based on the CHO configuration information, where the handover to the CHO target cell is initiated by using the second target cell configuration. In this way, a handover failure can be avoided and system reliability can be improved.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the time for initiating the handover to the CHO target cell is no later than the latest time in the target time range, the terminal initiates the handover to the CHO target cell based on the CHO configuration information, where the handover to the CHO target cell is initiated by using the second target cell configuration. In this way, a handover failure can be avoided and system reliability can be improved.

For descriptions related to the target time range, reference may be made to relevant descriptions in the above embodiments, and the same contents will not be further provided herein.

The second target cell configuration may be the same as or different from the first target cell configuration. In a case that the second target cell configuration is the same as the first target cell configuration, for descriptions related to the second target cell configuration, reference may be made to relevant descriptions of the first target cell configuration in the above embodiments, and the same contents will not be further provided herein.

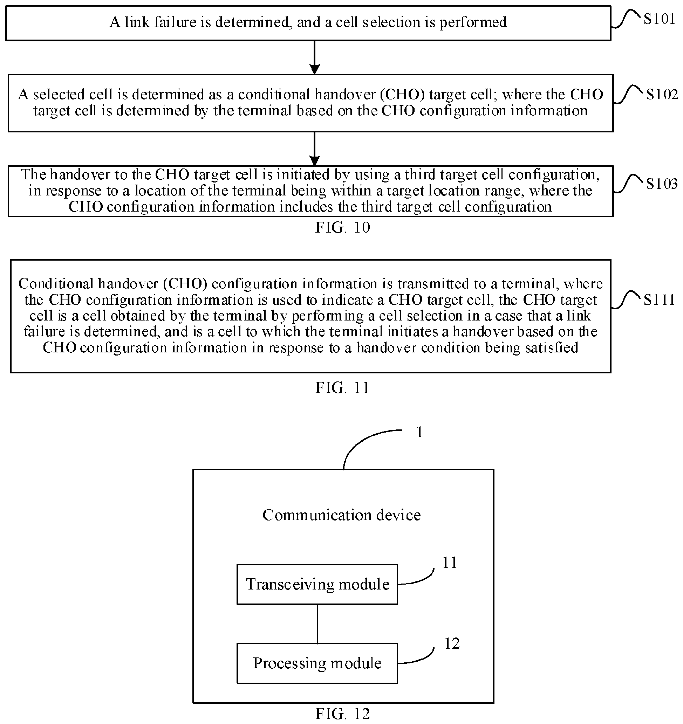

FIG. 10 is a flow chart of another cell handover method according to embodiments of the present disclosure. The cell handover method in this embodiment may be applied to a terminal. As shown in FIG. 10, the method may include but is not limited to the following steps.

S101: A link failure is determined, and a cell selection is performed.

S102: A selected cell is determined as a conditional handover (CHO) target cell; where the CHO target cell is determined by the terminal based on the CHO configuration information.

For descriptions related to S101 and S102, reference may be made to relevant descriptions in the above embodiments, and the same contents will not be further provided herein.

S103: The handover to the CHO target cell is initiated by using a third target cell configuration, in response to a location of the terminal being within a target location range, where the CHO configuration information includes the third target cell configuration.

In the embodiments of the present disclosure, the CHO configuration information includes the third target cell configuration.

In the embodiments of the present disclosure, the terminal determines the link failure, performs the cell selection, and determines the selected cell as the conditional handover (CHO) target cell; and in a case that it is determined that the handover condition is satisfied, i.e., it is determined that the location of the terminal is within the target location range, the terminal initiates the handover to the CHO target cell based on the CHO configuration information, where the handover to the CHO target cell is initiated by using the third target cell configuration. In this way, a handover failure can be avoided and system reliability can be improved.

For descriptions related to the target location range, reference may be made to relevant descriptions in the above embodiments, and the same contents will not be further provided herein.

The third target cell configuration may be the same as or different from the first target cell configuration. In a case that the third target cell configuration is the same as the first target cell configuration, for descriptions related to the third target cell configuration, reference may be made to relevant descriptions of the first target cell configuration in the above embodiments, and the same contents will not be further provided herein.

FIG. 11 is a flow chart of another cell handover method according to embodiments of the present disclosure. The cell handover method in this embodiment may be applied to a network side device. Those skilled in the art can understand that in the method performed by the network side device, expressions for corresponding parameters are consistent with those in the method embodiments for the terminal, which will not be further provided herein.

As shown in FIG. 11, the method may include but is not limited to the following steps.

S111: Conditional handover (CHO) configuration information is transmitted to a terminal, where the CHO configuration information is used to indicate a CHO target cell, the CHO target cell is a cell obtained by the terminal by performing a cell selection in a case that a link failure is determined, and is a cell to which the terminal initiates a handover based on the CHO configuration information in response to a handover condition being satisfied.

In the embodiments of the present disclosure, the terminal performs a cell selection in a case that a link failure is determined. For example, in a case that a radio link failure or a handover failure is determined, a cell selection is performed, where cell(s) are randomly selected from candidate cells, or cell(s) are selected based on a configuration of a network side device or an agreement in a protocol, etc.

For descriptions related to the link failure, reference may be made to relevant descriptions in the above embodiments, and the same contents will not be further provided herein.

In some embodiments, the CHO configuration information includes a target beam and a first target cell configuration.

For descriptions related to the target beam and the first target cell configuration, reference may be made to relevant descriptions in the above embodiments, and the same contents will not be further provided herein.

In some embodiments, the CHO configuration information includes reconfiguration information provided by the CHO target cell, and the reconfiguration information is used to indicate the first target cell configuration.

In some embodiments, the CHO configuration information includes a target beam and a target cell L3 configuration.

In some embodiments, the target cell L3 configuration includes at least one of:

> a radio resource control (RRC) configuration;
> a service data adaptation protocol (SDAP) configuration;
> a packet data convergence protocol (PDCP) configuration;
> a radio link control (RLC) configuration;
> a medium access control (MAC) configuration;
> a bearer configuration;
> a measurement configuration; or,
> a handover configuration.

For descriptions related to the target beam and the target cell L3 configuration, reference may be made to relevant descriptions in the above embodiments, and the same contents will not be further provided herein.

In some embodiments, the CHO configuration information further includes a target cell L1 configuration or a target cell L2 configuration.

In some embodiments, the target cell L1 configuration includes at least one of:

> a physical layer configuration;
> a beam configuration;
> a random access resource;
> a contention-based random access manner;
> a transmission power; or,
> a modulation and demodulation order.

In some embodiments, the target cell L2 configuration includes at least one of:

> a physical layer configuration;
> a beam configuration;
> a random access resource;
> a contention-based random access manner;
> a transmission power; or,
> a modulation and demodulation order.

For descriptions related to the target cell L1 configuration and the target cell L2 configuration, reference may be made to relevant descriptions in the above embodiments, and the same contents will not be further provided herein.

In some embodiments, the CHO configuration information includes a second target cell configuration.

For descriptions related to the second target cell configuration, reference may be made to relevant descriptions in the above embodiments, and the same contents will not be further provided herein.

In some embodiments, in the cell handover method according to the embodiments of the present disclosure, the network side device configures a timer length or a duration for the terminal.

In some embodiments, the CHO configuration information includes a third target cell configuration.

For descriptions related to the third target cell configuration, reference may be made to relevant descriptions in the above embodiments, and the same contents will not be further provided herein.

It should be noted that in the embodiments of the present disclosure, for the operation process that is after the network side device transmits the CHO configuration information to the terminal and the terminal receives the CHO configuration information, reference may be made to relevant descriptions in the relevant embodiments on the terminal side, and the same contents will not be further provided herein.

In the above embodiments of the present disclosure, the methods provided by the embodiments of the present disclosure are introduced from the perspectives of the network side device and the terminal respectively. In order to implement the various functions in the methods provided by the embodiments of the present disclosure, the network side device and the terminal each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

FIG. 12 is a structural diagram of a communication device 1 according to embodiments of the present disclosure. The communication device 1 shown in FIG. 12 may include a transceiving module 11 and a processing module 12. The transceiving module 11 may include a transmission module and/or a reception module. The transmission module is configured to implement a transmission function, and the reception module is configured to implement a reception function. The transceiving module 11 may implement a transmission function and/or a reception function.

The communication device 1 may be a terminal, or a device in the terminal, or a device that may be used in conjunction with the terminal. Or, the communication device 1 may be a network side device, or a device in a network side device, or a device that may be used in conjunction with a network side device.

The communication device 1, on the terminal side, includes a processing module 12 and a transceiving module 11.

The processing module 12 is configured to determine a link failure and perform a cell selection.

The processing module 12 is further configured to determine a selected cell as a conditional handover (CHO) target cell, where the CHO target cell is determined by the terminal based on CHO configuration information.

The transceiving module 11 is configured to initiate a handover to the CHO target cell based on the CHO configuration information, in response to a handover condition being satisfied.

In some embodiments, the transceiving module 11 is further configured to receive the CHO configuration information transmitted by a network side device.

In some embodiments, the link failure includes at least one of:

a handover failure;

a radio link failure;

a reconfiguration failure;

a timer expiration;

an integrity check failure;

it is detected by a remote terminal that a radio link failure of a sidelink occurs between the remote terminal and a relay terminal, where the terminal is the remote terminal; or,

a notification message transmitted by a relay terminal is received by a remote terminal, where the terminal is the remote terminal.

In some embodiments, the CHO configuration information includes a target beam and a first target cell configuration, and the transceiving module 11 is configured to: initiate the handover to the CHO target cell by using the first target cell configuration, in response to a first beam in the CHO target cell selected being the same as the target beam.

In some embodiments, the CHO configuration information includes a target beam and a first target cell configuration, and the transceiving module 11 is configured to: initiate the handover to the CHO target cell by using the first target cell configuration, in response to a first beam in the CHO target cell selected being the same as the target beam and a time for initiating the handover to the CHO target cell being within a target time range.

In some embodiments, the CHO configuration information includes a target beam and a first target cell configuration, and the transceiving module 11 is configured to: initiate the handover to the CHO target cell by using the first target cell configuration, in response to a first beam in the CHO target cell selected being the same as the target beam and a location of the terminal being within a target location range.

In some embodiments, the first target cell configuration is determined based on reconfiguration information provided by the CHO target cell in the CHO configuration information.

In some embodiments, the first beam is at least one candidate beam with a beam quality greater than a specific threshold in the CHO target cell.

In some embodiments, the first beam is a beam with a strongest signal in the CHO target cell.

In some embodiments, the CHO configuration information includes a target beam and a target cell L3 configuration, and the transceiving module 11 is configured to: initiate the handover to the CHO target cell by using the target cell L3 configuration, in response to a second beam in the CHO target cell selected being different from the target beam.

In some embodiments, the CHO configuration information includes a target beam and a target cell L3 configuration, and the transceiving module 11 is configured to: initiate the handover to the CHO target cell by using the target cell L3 configuration, in response to a second beam in the CHO target cell selected being different from the target beam and a time for initiating the handover to the CHO target cell being within a target time range.

In some embodiments, the CHO configuration information includes a target beam and a target cell L3 configuration, and the transceiving module 11 is configured to: initiate the handover to the CHO target cell by using the target cell L3 configuration, in response to a second beam in the CHO target cell selected being different from the target beam and a location of the terminal being within a target location range.

In some embodiments, the target cell L3 configuration includes at least one of:

a radio resource control (RRC) configuration;

a service data adaptation protocol (SDAP) configuration;

a packet data convergence protocol (PDCP) configuration;

a radio link control (RLC) configuration;

a medium access control (MAC) configuration;

a bearer configuration;

a measurement configuration; or,

a handover configuration.

In some embodiments, the CHO configuration information further includes a target cell L1 configuration or a target cell L2 configuration;

the target cell L1 configuration is determined based on a configuration of the network side device or is a default value specified in a protocol;

the target cell L2 configuration is determined based on a configuration of the network side device or is a default value specified in a protocol.

In some embodiments, the target cell L1 configuration includes at least one of:

a physical layer configuration;
a beam configuration;
a random access resource;
a contention-based random access manner;
a transmission power; or,
a modulation and demodulation order.

In some embodiments, the target cell L2 configuration includes at least one of:

a physical layer configuration;
a beam configuration;
a random access resource;
a contention-based random access manner;
a transmission power; or,
a modulation and demodulation order.

In some embodiments, the CHO configuration information includes a second target cell configuration, and the transceiving module 11 is configured to: initiate the handover to the CHO target cell by using the second target cell configuration, in response to a time for initiating the handover to the CHO target cell being within a target time range; or, initiate the handover to the CHO target cell by using the second target cell configuration, in response to a time for initiating the handover to the CHO target cell being no later than a latest time in a target time range.

In some embodiments, the target time range is a target absolute time range or a target relative time range;

the target absolute time range is a target UTC time range;
a start point of the target relative time range is a UTC time or an event triggering time, and a length of the target relative time range is a timer length of a timer or a duration;
the event triggering time is a time when the CHO configuration information is received, or a time when the CHO configuration information is executed, or a time when a measurement event configured by the network side device is satisfied.

In some embodiments, the timer length or the duration is determined based on a configuration of the network side device.

In some embodiments, the CHO configuration information includes a third target cell configuration, and the transceiving module 11 is configured to: initiate the handover to the CHO target cell by using the third target cell configuration, in response to a location of the terminal being within a target location range.

In some embodiments, the target location range is a target absolute location range or a target relative location range;

the target absolute location range is a target geographical location coordinate range;
the target relative location range is a target distance range between the terminal and the network side device, or a target distance range between the terminal and a reference point.

The communication device 1, on the network side device side, includes a transceiving module 11.

The transceiving module 11 is configured to transmit conditional handover (CHO) configuration information to a terminal, where the CHO configuration information is used to indicate a CHO target cell, the CHO target cell is a cell obtained by the terminal by performing a cell selection in a case that a link failure is determined, and is a cell to which the terminal initiates a handover based on the CHO configuration information in response to a handover condition being satisfied.

In some embodiments, the CHO configuration information includes a target beam and a first target cell configuration.

In some embodiments, the CHO configuration information includes reconfiguration information provided by the CHO target cell, and the reconfiguration information is used to indicate the first target cell configuration.

In some embodiments, the CHO configuration information includes a target beam and a target cell L3 configuration.

In some embodiments, the target cell L3 configuration includes at least one of:

a radio resource control (RRC) configuration;
a service data adaptation protocol (SDAP) configuration;
a packet data convergence protocol (PDCP) configuration;
a radio link control (RLC) configuration;
a medium access control (MAC) configuration;
a bearer configuration;
a measurement configuration; or,
a handover configuration.

In some embodiments, the CHO configuration information further includes a target cell L1 configuration or a target cell L2 configuration.

In some embodiments, the target cell L1 configuration includes at least one of:

a physical layer configuration;
a beam configuration;

a random access resource;
a contention-based random access manner;
a transmission power; or,
a modulation and demodulation order.

In some embodiments, the target cell L2 configuration includes at least one of:

a physical layer configuration;
a beam configuration;
a random access resource;
a contention-based random access manner;
a transmission power; or,
a modulation and demodulation order.

In some embodiments, the CHO configuration information includes a second target cell configuration.

In some embodiments, the transceiving module 11 is further configured to configure a timer length or a duration for the terminal.

In some embodiments, the CHO configuration information includes a third target cell configuration.

Regarding the communication device 1 in the above embodiments, the specific manners in which the various modules perform operations have been described in detail in the embodiments of the method, which will not be elaborated herein.

The communication device 1 according to the above embodiments of the present disclosure achieves the same or similar beneficial effects as the communication method according to some of the above embodiments, which will not be further described herein.

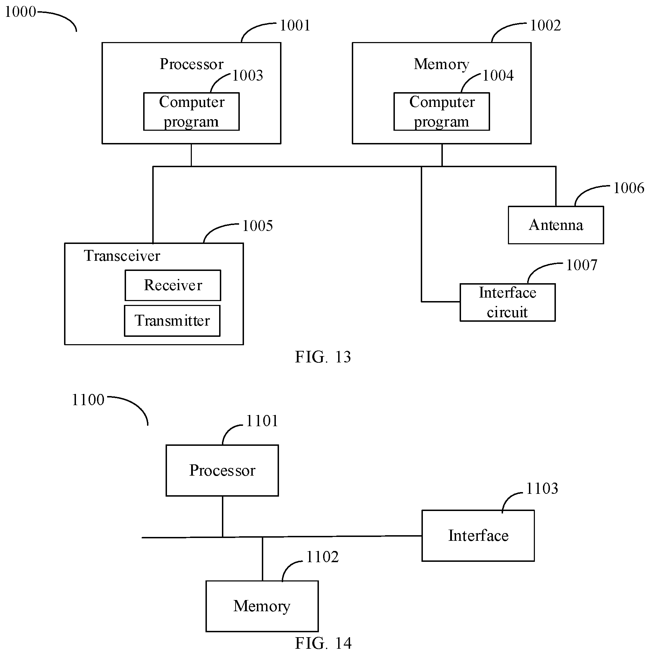

Reference is made to FIG. 13, which is a structural diagram of another communication device 1000 according to embodiments of the present disclosure. The communication device 1000 may be a network side device, or a terminal, or a chip, chip system, or processor that supports the network side device to implement the above method, or a chip, chip system, or processor that supports the terminal to implement the above method. The communication device 1000 may be configured to implement the method described in the above method embodiments. For details, reference may made to the description in the above method embodiments.

The communication device 1000 may include one or more processors 1001. The processor 1001 may be a general-purpose processor or a special-purpose processor, or the like. For example, the processor may be a baseband processor or a central processing unit. The baseband processor may be configured to process communication protocols and communication data. The central processing unit may be configured to control the communication device (such as a base station, a baseband chip, a terminal, a terminal chip, a DU or a CU, etc.), execute a computer program, and process data for the computer program.

Optionally, the communication device 1000 may further include one or more memories 1002, on which a computer program 1004 may be stored. The processor executes the computer program 1004, to cause the communication device 1000 to perform the method described in the above method embodiments. Optionally, the memory 1002 may further store data. The communication device 1000 and the memory 1002 may be arranged separately or integrated together.

Optionally, the communication device 1000 may further include a transceiver 1005 and an antenna 1006. The transceiver 1005 may be referred to as a transceiving unit, a transceiver unit, a transceiving circuit, etc., and is configured to implement transceiving functions. The transceiver 1005 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication device 1000 may further include one or more interface circuits 1007. The interface circuit 1007 is configured to receive code instructions and transmit them to the processor 1001. The processor 1001 executes the code instructions to cause the communication device 1000 to perform the method described in the above method embodiments.

The communication device 1000 is a terminal: the processor 1001 is configured to perform S21 and S22 in FIG. 2; S31 and S32 in FIG. 3; S41 and S42 in FIG. 4; S51 and S52 in FIG. 5; S61 and S62 in FIG. 6; S71 and S72 in FIG. 7; S81 and S82 in FIG. 8; S91 and S92 in FIG. 9; S101 and S102 in FIG. 10; the transceiver 1005 is configured to perform S23 in FIG. 2; S33 in FIG. 3; S43 in FIG. 4; S53 in FIG. 5; S63 in FIG. 6; S73 in FIG. 7; S83 in FIG. 8; S93 in FIG. 9; S103 in FIG. 10.

The communication device 1000 is a network side device: the transceiver 1005 is configured to perform S111 in FIG. 11.

In an implementation, the processor 1001 may include a transceiver for implementing transceiving functions. For example, the transceiver may be a transceiving circuit, an interface, or an interface circuit. The transceiving circuit, the interface or the interface circuit configured to implement the transceiving functions may be separated or integrated together. The above transceiving circuit, interface or interface circuit may be configured for reading and writing codes/data, or the above transceiving circuit, interface or interface circuit may be configured for signal transmission or transfer.

In an implementation, the processor 1001 may store a computer program 1003, and the computer program 1003 is executed on the processor 1001, to cause the communication device 1000 to perform the method described in the above method embodiments. The computer program 1003 may be embedded in the processor 1001, and in this case, the processor 1001 may be implemented by hardware.

In an implementation, the communication device 1000 may include a circuit, and the circuit may implement functions of reception or transmission or communication in the above method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a terminal, but the scope of the communication device described in the present disclosure is not limited thereto, and the structure of the communication device may not be limited to FIG. 13. The communication device may be a stand-alone device or may be part of a larger device. For example, the communication device may be:

(1) an independent integrated circuit (IC), or chip, or chip system or subsystem;
(2) a collection of one or more ICs, where, optionally, the IC collection may include a storage component for storing data and computer programs;
(3) ASIC, such as modem;
(4) a module that can be embedded into other devices;
(5) a receiver, terminal, intelligent terminal, a cellular phone, a wireless equipment, a handheld device, a mobile unit, a vehicle-mounted device, a network device, a cloud device, an artificial intelligence device, etc.;
(6) others, etc.

For a case where the communication device may be a chip or a chip system, reference is made to FIG. 14, which is a structural diagram of a chip according to embodiments of the present disclosure.
The chip 1100 includes a processor 1101 and an interface 1103. The quantity of processors 1101 may be one or more, and the quantity of interfaces 1103 may be multiple.
For a case where the chip is configured to implement the functions of the terminal in the embodiments of the present disclosure:

the interface 1103 is configured to receive code instructions and transmit them to the processor;
the processor 1101 is configured to execute the code instructions to perform the cell handover method as described in some of the above embodiments.

For a case where the chip is configured to implement the functions of the access network device in the embodiments of the present disclosure:

the interface 1103 is configured to receive code instructions and transmit them to the processor;
the processor 1101 is configured to execute the code instructions to perform the cell handover method as described in some of the above embodiments.

Optionally, the chip 1100 further includes a memory 1102, and the memory 1102 is configured to store needed computer programs and data.
Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.
Embodiments of the present disclosure further provide a communication system, which includes a communication device as the terminal and a communication device as the access network device in the embodiment of FIG. 12 in the above, or the system includes a communication device as the terminal and a communication device as the access network device in the embodiment of FIG. 13 in the above.
The present disclosure further provides a readable storage medium, on which instructions are stored. When the instructions are executed by a computer, functions of any of the above method embodiments are implemented.
The present disclosure further provides a computer program product. The computer program product is executed by a computer to implement functions of any of the above method embodiments.
The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present disclosure are only for convenience of description and are not used to limit the scope of the embodiments of the present disclosure, or to indicate the order.

At least one in the present disclosure may also be described as one or more, and multiple may be two, three, four or more, which are not limited by the present disclosure. In the embodiments of the present disclosure, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

**Claims**

1. A cell handover method, performed by a terminal, comprising:

    determining a link failure, and performing a cell selection;
    determining a selected cell as a conditional handover (CHO) target cell, wherein the CHO target cell is determined by the terminal based on CHO configuration information; and
    initiating a handover to the CHO target cell based on the CHO configuration information, in response to a handover condition being satisfied.

2. The cell handover method according to claim 1, further comprising:
   receiving the CHO configuration information transmitted by a network side device.

3. The cell handover method according to claim 1, wherein the link failure comprises at least one of:

    a handover failure;
    a radio link failure;
    a reconfiguration failure;
    a timer expiration;
    an integrity check failure;
    detecting by a remote terminal that a radio link failure of a sidelink occurs between the remote terminal and a relay terminal, wherein the terminal is the remote terminal; or,

a notification message transmitted by a relay terminal is received by a remote terminal, wherein the terminal is the remote terminal.

4. The cell handover method according to any one of claims 1 to 3, wherein the CHO configuration information comprises a target beam and a first target cell configuration, and the initiating the handover to the CHO target cell based on the CHO configuration information in response to the handover condition being satisfied comprises:
initiating the handover to the CHO target cell by using the first target cell configuration, in response to a first beam in the CHO target cell selected being the same as the target beam.

5. The cell handover method according to any one of claims 1 to 3, wherein the CHO configuration information comprises a target beam and a first target cell configuration, and the initiating the handover to the CHO target cell based on the CHO configuration information in response to the handover condition being satisfied comprises:
initiating the handover to the CHO target cell by using the first target cell configuration, in response to a first beam in the CHO target cell selected being the same as the target beam and a time for initiating the handover to the CHO target cell being within a target time range.

6. The cell handover method according to any one of claims 1 to 3, wherein the CHO configuration information comprises a target beam and a first target cell configuration, and the initiating the handover to the CHO target cell based on the CHO configuration information in response to the handover condition being satisfied comprises:
initiating the handover to the CHO target cell by using the first target cell configuration, in response to a first beam in the CHO target cell selected being the same as the target beam and a location of the terminal being within a target location range.

7. The cell handover method according to any one of claims 4 to 6, wherein the first target cell configuration is determined based on reconfiguration information provided by the CHO target cell in the CHO configuration information.

8. The cell handover method according to any one of claims 4 to 6, wherein the first beam is at least one candidate beam with a beam quality greater than a specific threshold in the CHO target cell.

9. The cell handover method according to any one of claims 4 to 6, wherein the first beam is a beam with a strongest signal in the CHO target cell.

10. The cell handover method according to any one of claims 1 to 3, wherein the CHO configuration information comprises a target beam and a target cell L3 configuration, and the initiating the handover to the CHO target cell based on the CHO configuration information in response to the handover condition being satisfied comprises:
initiating the handover to the CHO target cell by using the target cell L3 configuration, in response to a second beam in the CHO target cell selected being different from the target beam.

11. The cell handover method according to any one of claims 1 to 3, wherein the CHO configuration information comprises a target beam and a target cell L3 configuration, and the initiating the handover to the CHO target cell based on the CHO configuration information in response to the handover condition being satisfied comprises:
initiating the handover to the CHO target cell by using the target cell L3 configuration, in response to a second beam in the CHO target cell selected being different from the target beam and a time for initiating the handover to the CHO target cell being within a target time range.

12. The cell handover method according to any one of claims 1 to 3, wherein the CHO configuration information comprises a target beam and a target cell L3 configuration, and the initiating the handover to the CHO target cell based on the CHO configuration information in response to the handover condition being satisfied comprises:
initiating the handover to the CHO target cell by using the target cell L3 configuration, in response to a second beam in the CHO target cell selected being different from the target beam and a location of the terminal being within a target location range.

13. The cell handover method according to any one of claims 10 to 12, wherein the target cell L3 configuration comprises at least one of:

a radio resource control (RRC) configuration;
a service data adaptation protocol (SDAP) configuration;
a packet data convergence protocol (PDCP) configuration;
a radio link control (RLC) configuration;
a medium access control (MAC) configuration;
a bearer configuration;
a measurement configuration; or,
a handover configuration.

14. The cell handover method according to any one of claims 10 to 12, wherein the CHO configuration information further comprises a target cell L1 configuration or a target cell L2 configuration;

wherein the target cell L1 configuration is determined based on a configuration of the network side device or is a default value specified in a protocol;

wherein the target cell L2 configuration is determined based on a configuration of the network side device or is a default value specified in a protocol.

15. The cell handover method according to claim 14, wherein the target cell L1 configuration comprises at least one of:

a physical layer configuration;
a beam configuration;
a random access resource;
a contention-based random access manner;
a transmission power; or,
a modulation and demodulation order;
wherein the target cell L2 configuration comprises at least one of:

a physical layer configuration;
a beam configuration;
a random access resource;
a contention-based random access manner;
a transmission power; or,
a modulation and demodulation order.

16. The cell handover method according to any one of claims 1 to 3, wherein the CHO configuration information comprises a second target cell configuration, and the initiating the handover to the CHO target cell based on the CHO configuration information in response to the handover condition being satisfied comprises:

initiating the handover to the CHO target cell by using the second target cell configuration, in response to a time for initiating the handover to the CHO target cell being within a target time range; or,
initiating the handover to the CHO target cell by using the second target cell configuration, in response to a time for initiating the handover to the CHO target cell being no later than a latest time in a target time range.

17. The cell handover method according to claim 5, claim 11 or claim 16, wherein the target time range is a target absolute time range or a target relative time range;

wherein the target absolute time range is a target UTC time range;
wherein a start point of the target relative time range is a UTC time or an event triggering time, and a length of the target relative time range is a timer length of a timer or a duration;
wherein the event triggering time is a time when the CHO configuration information is received, or a time when the CHO configuration information is executed, or a time when a measurement event configured by the network side device is satisfied.

18. The cell handover method according to claim 17, wherein the timer length or the duration is determined based on a configuration of the network side device.

19. The cell handover method according to any one of claims 1 to 3, wherein the CHO configuration information comprises a third target cell configuration, and the initiating the handover to the CHO target cell based on the CHO configuration information in response to the handover condition being satisfied comprises:
initiating the handover to the CHO target cell by using the third target cell configuration, in response to a location of the terminal being within a target location range.

20. The cell handover method according to claim 6, claim 12 or claim 19, wherein the target location range is a target absolute location range or a target relative location range;

wherein the target absolute location range is a target geographical location coordinate range;
wherein the target relative location range is a target distance range between the terminal and the network side device, or a target distance range between the terminal and a reference point.

21. A cell handover method, performed by a network side device, comprising:
transmitting conditional handover (CHO) configuration information to a terminal, wherein the CHO configuration information is used to indicate a CHO target cell, the CHO target cell is a cell obtained by the terminal in determining a link failure and performing a cell selection, and is a cell to which the terminal initiates a handover based on the CHO configuration information in response to a handover condition being satisfied.

22. The cell handover method according to claim 21, wherein the CHO configuration information comprises a target beam and a first target cell configuration.

23. The cell handover method according to claim 22, wherein the CHO configuration information comprises reconfiguration information provided by the CHO target cell, and the reconfiguration information is used to indicate the first target cell configuration.

24. The cell handover method according to claim 21, wherein the CHO configuration information comprises a target beam and a target cell L3 configuration.

25. The cell handover method according to claim 24, wherein the target cell L3 configuration comprises at least one of:

a radio resource control (RRC) configuration;
a service data adaptation protocol (SDAP) configuration;
a packet data convergence protocol (PDCP) configuration;
a radio link control (RLC) configuration;
a medium access control (MAC) configuration;
a bearer configuration;
a measurement configuration; or,
a handover configuration.

26. The cell handover method according to claim 24 or claim 25, wherein the CHO configuration information further comprises a target cell L1 configuration or a target cell L2 configuration.

27. The cell handover method according to claim 26, wherein the target cell L1 configuration comprises at least one of:

a physical layer configuration;
a beam configuration;
a random access resource;
a contention-based random access manner;
a transmission power; or,
a modulation and demodulation order;
wherein the target cell L2 configuration comprises at least one of:

a physical layer configuration;
a beam configuration;
a random access resource;
a contention-based random access manner;
a transmission power; or,
a modulation and demodulation order.

28. The cell handover method according to claim 21, wherein the CHO configuration information comprises a second target cell configuration.

29. The cell handover method according to claim 21, further comprising:
configuring a timer length or a duration for the terminal.

30. The cell handover method according to claim 21, wherein the CHO configuration information comprises a third target cell configuration.

31. A communication device, set in a terminal, comprising:

a processing module, configured to determine a link failure, and perform a cell selection, wherein the processing module is further configured to determine a selected cell as a conditional handover (CHO) target cell, wherein the CHO target cell is determined by the terminal based on CHO configuration information; and
a transceiving module, configured to initiate a handover to the CHO target cell based on the CHO configuration information, in response to a handover condition being satisfied.

32. A communication device, set in a network side device, comprising:
a transceiving module, configured to transmit conditional handover (CHO) configuration information to a terminal, wherein the CHO configuration information is used to indicate a CHO target cell, the CHO target cell is a cell obtained by the terminal by performing a cell selection in a case that a link failure is determined, and is a cell to which the terminal initiates a handover based on the CHO configuration information in response to a handover condition being satisfied.

33. A communication device, comprising a processor and a memory, wherein the memory is configured to store a computer program, and the processor is configured to execute the computer program stored in the memory to cause the communication device to perform the cell handover method according to any one of claims 1 to 20, or the processor is configured to execute the computer program stored in the memory to cause the communication device to perform the cell handover method according to any one of claims 21 to 30.

34. A communication device, comprising: a processor and an interface circuit;

wherein the interface circuit is configured to receive code instructions and transmit the code instructions to the processor; and
wherein the processor is configured to execute the code instructions to perform the cell handover method according to any one of claims 1 to 20, or is configured to execute the code instructions to execute the cell handover method according to any one of claims 21 to 30.

35. A computer readable storage medium, configured to store instructions, wherein when the instructions are executed, the cell handover method according to any one of claims 1 to 20 is performed, or, when the instructions are executed, the cell handover method according to any one of claims 21 to 30 is performed.

10

Communication system

101

Network side device

102

Terminal

FIG. 1

A link failure is determined, and a cell selection is performed — S21

A selected cell is determined as a conditional handover (CHO) target cell; where the CHO target cell is determined by the terminal based on the CHO configuration information — S22

A handover to the CHO target cell is initiated based on the CHO configuration information, in response to a handover condition being satisfied — S23

FIG. 2

A link failure is determined, and a cell selection is performed — S31

A selected cell is determined as a conditional handover (CHO) target cell; where the CHO target cell is determined by the terminal device based on the CHO configuration information — S32

The handover to the CHO target cell is initiated by using a first target cell configuration, in response to a first beam in the CHO target cell selected being the same as a target beam, where the CHO configuration information includes the target beam and the first target cell configuration — S33

FIG. 3

A link failure is determined, and a cell selection is performed — S41

A selected cell is determined as a conditional handover (CHO) target cell; where the CHO target cell is determined by the terminal based on the CHO configuration information — S42

The handover to the CHO target cell is initiated by using a first target cell configuration, in response to a first beam in the CHO target cell selected being the same as a target beam and a time for initiating the handover to the CHO target cell being within a target time range, where the CHO configuration information includes the target beam and the first target cell configuration — S43

FIG. 4

A link failure is determined, and a cell selection is performed — S51

A selected cell is determined as a conditional handover (CHO) target cell; where the CHO target cell is determined by the terminal based on the CHO configuration information — S52

The handover to the CHO target cell is initiated by using a first target cell configuration, in response to a first beam in the CHO target cell selected being the same as a target beam and a location of the terminal being within a target location range, where the CHO configuration information includes the target beam and the first target cell configuration — S53

FIG. 5

A link failure is determined, and a cell selection is performed — S61

A selected cell is determined as a conditional handover (CHO) target cell; where the CHO target cell is determined by the terminal based on the CHO configuration information — S62

The handover to the CHO target cell is initiated by using a target cell L3 configuration, in response to a second beam in the CHO target cell selected being different from a target beam, where the CHO configuration information includes the target beam and the target cell L3 configuration — S63

FIG. 6

| | |
|---|---|
| A link failure is determined, and a cell selection is performed | S71 |

↓

| | |
|---|---|
| A selected cell is determined as a conditional handover (CHO) target cell; where the CHO target cell is determined by the terminal based on the CHO configuration information | S72 |

↓

| | |
|---|---|
| The handover to the CHO target cell is initiated by using a target cell L3 configuration, in response to a second beam in the CHO target cell selected being different from a target beam and a time for initiating the handover to the CHO target cell being within a target time range, where the CHO configuration information includes the target beam and the target cell L3 configuration | S73 |

FIG. 7

| | |
|---|---|
| A link failure is determined, and a cell selection is performed | S81 |

↓

| | |
|---|---|
| A selected cell is determined as a conditional handover (CHO) target cell; where the CHO target cell is determined by the terminal based on the CHO configuration information | S82 |

↓

| | |
|---|---|
| The handover to the CHO target cell is initiated by using a target cell L3 configuration, in response to a second beam in the CHO target cell selected being different from a target beam and a location of the terminal being within a target location range, where the CHO configuration information includes the target beam and the target cell L3 configuration | S83 |

FIG. 8

| | |
|---|---|
| A link failure is determined, and a cell selection is performed | S91 |

↓

| | |
|---|---|
| A selected cell is determined as a conditional handover (CHO) target cell; where the CHO target cell is determined by the terminal based on the CHO configuration information | S92 |

↓

| | |
|---|---|
| The handover to the CHO target cell is initiated by using a second target cell configuration, in response to a time for initiating the handover to the CHO target cell being within a target time range; or, the handover to the CHO target cell is initiated by using a second target cell configuration, in response to a time for initiating the handover to the CHO target cell being no later than a latest time in a target time range; where the CHO configuration information includes the second target cell configuration | S93 |

FIG. 9

| A link failure is determined, and a cell selection is performed | S101 |

↓

| A selected cell is determined as a conditional handover (CHO) target cell; where the CHO target cell is determined by the terminal based on the CHO configuration information | S102 |

↓

| The handover to the CHO target cell is initiated by using a third target cell configuration, in response to a location of the terminal being within a target location range, where the CHO configuration information includes the third target cell configuration | S103 |

FIG. 10

| Conditional handover (CHO) configuration information is transmitted to a terminal, where the CHO configuration information is used to indicate a CHO target cell, the CHO target cell is a cell obtained by the terminal by performing a cell selection in a case that a link failure is determined, and is a cell to which the terminal initiates a handover based on the CHO configuration information in response to a handover condition being satisfied | S111 |

FIG. 11

1

Communication device

Transceiving module — 11

Processing module — 12

FIG. 12

1000 —

1001

Processor

1003

Computer program

1002

Memory

1004

Computer program

1006

Antenna

1005

Transceiver

Receiver

Transmitter

1007

Interface circuit

FIG. 13

1100 —

1101

Processor

1103

Interface

1102

Memory

FIG. 14

## INTERNATIONAL SEARCH REPORT

International application No.

**PCT/CN2022/093405**

| A. | CLASSIFICATION OF SUBJECT MATTER |
|---|---|

H04W 36/00(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 小区, 切换, 链路, 失败, 终端, 小区选择, 条件切换, CHO, 目标小区, 配置信息, 切换条件, cell, handover, link, failure, terminal, cell selection, conditional handover, target cell, configuration information, handover conditions

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113271633 A (HUAWEI TECHNOLOGIES CO., LTD.) 17 August 2021 (2021-08-17) description, paragraphs [0100]-[0233], and figures 1-9, and claims 1-23 | 1-35 |
| X | CN 112243273 A (SHARP CORP.) 19 January 2021 (2021-01-19) description, paragraphs [0029]-[0095], and figures 1-4, and claims 1-10 | 1-35 |
| A | CN 113475118 A (OPPO GUANGDONG MOBILE TELECOMMUNICATIONS CO., LTD.) 01 October 2021 (2021-10-01) entire document | 1-35 |
| A | US 2020314947 A1 (SAMSUNG ELECTRONICS CO., LTD.) 01 October 2020 (2020-10-01) entire document | 1-35 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2022** | **29 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| International application No. |
| --- |
| **PCT/CN2022/093405** |

| Patent document cited in search report | | | Publication date (day/month/year) | Patent family member(s) | | | Publication date (day/month/year) |
| --- | --- | --- | --- | --- | --- | --- | --- |
| CN | 113271633 | A | 17 August 2021 | WO | 2021159980 | A1 | 19 August 2021 |
| CN | 112243273 | A | 19 January 2021 | WO | 2021008478 | A1 | 21 January 2021 |
| CN | 113475118 | A | 01 October 2021 | WO | 2021031189 | A1 | 25 February 2021 |
| US | 2020314947 | A1 | 01 October 2020 | WO | 2020204529 | A1 | 08 October 2020 |
| | | | | EP | 3878211 | A1 | 15 September 2021 |
| | | | | CN | 114128350 | A | 01 March 2022 |
| | | | | KR | 20210134917 | A | 11 November 2021 |

Form PCT/ISA/210 (patent family annex) (January 2015)